Europäisches Patentamt

European Patent Office

Office européen des brevets

(19)

(11) Numéro de publication : **0 124 414**
**B1**

(12) **FASCICULE DE BREVET EUROPÉEN**

(45) Date de publication du fascicule du brevet :
30.07.86

(21) Numéro de dépôt : **84400751.8**

(22) Date de dépôt : **16.04.84**

(51) Int. Cl.⁴ : **F 16 F 9/44**, B 60 G 15/12, B 60 G 11/30

(54) Accumulateur oléopneumatique pour suspension de véhicule automobile.

(30) Priorité : 02.05.83 FR 8307480

(43) Date de publication de la demande :
07.11.84 Bulletin 84/45

(45) Mention de la délivrance du brevet :
30.07.86 Bulletin 86/31

(84) Etats contractants désignés :
DE GB IT

(56) Documents cités :
FR-A- 1 510 677
FR-A- 2 088 803
GB-A- 825 070
GB-A- 931 300

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Perineau, Jean Gérard**
**20, rue des Marronniers**
**F-94260 Fresne (FR)**
Inventeur : **Richard, Denis Edouard**
**10, rue Henri Corvol**
**F-94600 Choisy-le-Roi (FR)**

(74) Mandataire : **Boivin, Claude**
**9, rue Edouard-Charton**
**F-78000 Versailles (FR)**

EP 0 124 414 B1

Jouve, 18, rue St-Denis, 75001 Paris, France

## Description

La présente invention concerne les accumulateurs oléopneumatiques pour suspension de véhicule, comprenant une enceinte munie d'une membrane souple la séparant en deux compartiments dont l'un est destiné à recevoir un gaz sous pression et dont le second est muni de moyens propres à le raccorder, par l'intermédiaire d'un amortisseur à un circuit hydraulique de la suspension.

Les suspensions équipées d'accumulateurs de ce genre comportaient jusqu'à présent un accumulateur par roue, muni d'un amortisseur. Il n'était pas possible selon cette technique d'utiliser des amortisseurs réglables, car il est indispensable pour une bonne tenue de route que l'amortissement soit identique pour les deux roues de chaque essieu.

Il peut cependant être intéressant, en particulier pour les voitures de course, de régler l'amortissement de la suspension selon le circuit à parcourir. Il faut donc, par raison de sécurité, que les moyens de réglage garantissent un amortissement identique pour les deux roues de chaque essieu.

Il est connu par le brevet anglais 825 070 une suspension dans laquelle l'accumulateur hydropneumatique est relié aux vérins de suspension avant et arrière par l'intermédiaire d'un même amortisseur. Mais cette suspension ne fonctionne pas correctement. En effet, si un vérin est en compression alors que l'autre est en dépression, le liquide circule d'un vérin à l'autre et les vibrations ne sont pas amorties.

La présente invention a pour objet un accumulateur oléopneumatique pour suspension de véhicule automobile, qui est muni de moyens d'amortissement réglables et fonctionne correctement.

L'accumulateur selon l'invention est caractérisé en ce que le second compartiment de son enceinte est relié à deux raccords par deux circuits séparés sur chacun desquels est interposé un amortisseur, et, en ce qu'il comporte des moyens de régler simultanément les deux amortisseurs.

Il suffit alors de relier chacun des raccords au circuit hydraulique de la suspension de l'une des roues d'un essieu, et l'autre raccord au circuit hydraulique de la suspension de la seconde roue de cet essieu. Lorsqu'on agit sur les moyens de réglage, on modifie simultanément la loi d'amortissement des deux roues.

L'accumulateur peut comporter un corps d'amortisseur communiquant par une ouverture latérale avec ledit second compartiment et muni d'un raccord à chacune de ses extrémités. Les amortisseurs peuvent être disposés à l'intérieur de ce corps, chacun entre l'ouverture et l'un des raccords.

Pour permettre le réglage des amortisseurs, il peut être prévu un circuit de dérivation parallèle avec chacun d'eux et des moyens pour régler simultanément le débit dans les deux circuits de dérivation.

Les moyens de réglage du débit peuvent être constitués par un tiroir rotatif muni à sa périphérie d'orifices calibrés de sections différentes, mobiles devant deux conduits communiquant avec chacun des raccords, les orifices étant disposés de manière que, pour toute position angulaire du tiroir, les orifices qui se trouvent simultanément devant les deux conduits, aient la même section.

Il peut être prévu une goupille ou épingle pour immobiliser le tiroir dans sa position de réglage.

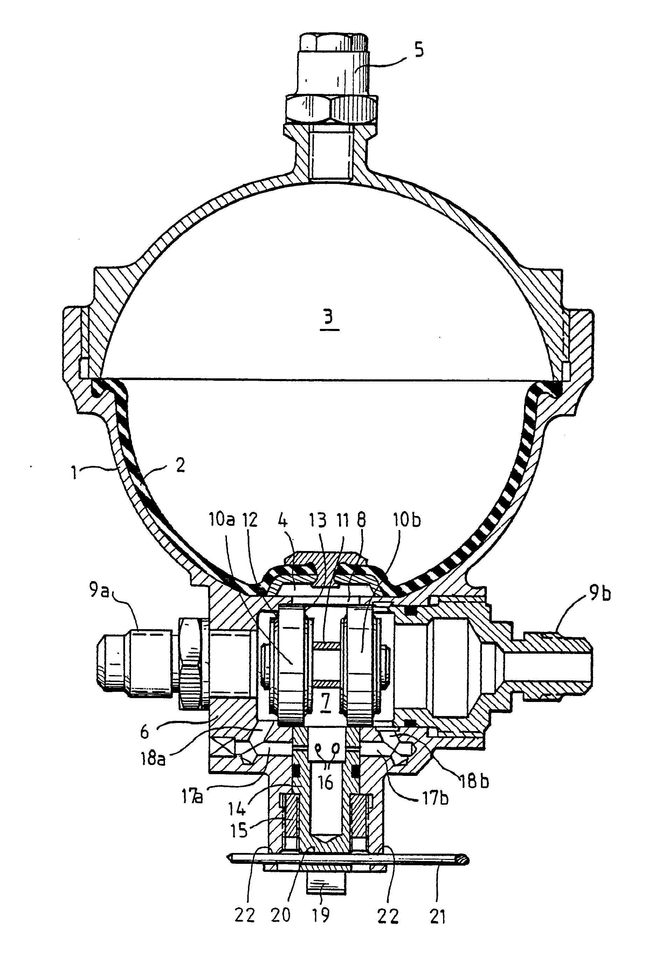

On a décrit ci-après, à titre d'exemple non limitatif, un mode de réalisation de l'accumulateur selon l'invention, avec référence à la figure unique du dessin annexé qui est une vue en coupe axiale de cet accumulateur.

Tel qu'il est représenté au dessin, l'accumulateur oléopneumatique selon l'invention, comprend un récipient ou enceinte 1 qui est divisé par une membrane souple 2 en deux compartiments 3 et 4. Un raccord 5 permet d'introduire un gaz sous pression dans le compartiment 3.

Le récipient 1 est solidaire d'un corps d'amortisseur 6, en forme de T, avec la chambre intérieure 7 duquel il communique par une ouverture latérale 8. L'une des branches latérales du corps 6 porte un raccord 9a destiné à être relié au circuit hydraulique de suspension de l'une des roues d'un essieu. Un second raccord 9b destiné à être relié au circuit hydraulique de suspension de la seconde roue de cet essieu, est vissé dans l'autre branche latérale du corps. La chambre 7 communique par ailleurs avec un raccord latéral non visible au dessin, et destiné à être relié à un dispositif correcteur de hauteur.

Dans la chambre intérieure 7 du corps 6 sont disposés deux amortisseurs hydrauliques 10a et 10b maintenus en appui contre des butées intérieures du corps par une entretoise 11 qui est interposée entre eux. Chacun de ces amortisseurs est à double effet c'est-à-dire qu'il freine le passage du liquide aussi bien de la chambre 7 vers le raccord 9a ou 9b que de ce raccord vers la chambre 7. Il comporte à cet effet deux clapets opposés 12 et 13.

Dans la chambre centrale du corps 6, qui est opposée à l'ouverture 8, est disposé un tiroir rotatif 14 maintenu en place par un écrou 15. La face intérieure de ce tiroir communique avec la chambre 7. Il est par ailleurs percé d'orifices calibrés 16 dont les sections vont en croissant sur la moitié de la périphérie du tiroir, deux orifices diamétralement opposés ayant la même section. Ces orifices sont mobiles devant deux perçages 17a et 17b qui se trouvent dans un même plan passant par l'axe de rotation du tiroir et communiquent, par l'intermédiaire d'un perçage 18a ou 18b avec des espaces se trouvant respectivement entre l'amortisseur 10a et le raccord 9a, et entre l'amortisseur 10b et le raccord 9b.

Le tiroir rotatif 14 fait saillie à l'extérieur du corps 6 et est terminé par une portion de manœuvre 19, par exemple à six pans. Sa partie extérieure est percée d'un trou 20 pour le passage d'une goupille ou épingle 21. Par ailleurs, la branche centrale du corps 6 présente à son extrémité une série de trous 22 dans lesquels peut s'engager la goupille 21. Ces trous sont disposés de manière à permettre le passage de la goupille pour chaque position de réglage du tiroir 14.

Les circuits 17a-18a et 17b-18b sont disposés en parallèles avec les amortisseurs 10a et 10b. Par suite, lorsqu'on manœuvre le tiroir 14 de façon à régler les débits de liquide pouvant les traverser, on règle simultanément l'amortissement des circuits de suspension des deux roues de l'essieu. Lorsque le tiroir occupe la position de réglage désirée, on l'immobilise à l'aide de la goupille 21.

### Revendications

1. Accumulateur oléopneumatique pour suspension de véhicule, comprenant une enceinte (1) munie d'une membrane souple (2) la séparant en deux compartiments (3) et (4) dont l'un est destiné à recevoir un gaz sous pression et dont le second est muni de moyens propres à le raccorder, par l'intermédiaire d'un amortisseur, à un circuit hydraulique de la suspension, caractérisé en ce que le second compartiment (4) de son enceinte est relié à deux raccords (9a) et (9b) par deux circuits séparés sur chacun desquels est interposé un amortisseur (10a) ou (10b), et en ce qu'il comporte des moyens (14) permettant de régler simultanément les deux amortisseurs.

2. Accumulateur selon la revendication 1, caractérisé en ce qu'il comporte un corps d'amortisseur (6) communiquant par une ouverture latérale (8) avec ledit second compartiment (4) et muni d'un raccord (9a) ou (9b) à chacune de ses extrémités.

3. Accumulateur selon la revendication 2, caractérisé en ce que les amortisseurs (10a) et (10b) sont disposés à l'intérieur du corps (6), chacun entre l'ouverture (8) et l'un des raccords (9a) ou (9b).

4. Accumulateur selon l'une des revendications 1 à 3, caractérisé par un circuit de dérivation (17a-18a) ou (17b-18b) en parallèle avec chacun des amortisseurs (10a) et (10b) et des moyens (14) pour régler simultanément le débit dans les deux circuits de dérivation.

5. Accumulateur selon la revendication 4, caractérisé en ce que les moyens de réglage du débit sont constitués par un tiroir rotatif (14) muni à sa périphérie d'orifices calibrés (16) de sections différentes, mobiles devant deux conduits communiquant avec chacun des raccords, les orifices (16) étant disposés de manière que, pour toute position angulaire du tiroir, les orifices qui se trouvent simultanément devant les deux conduits, aient la même section.

6. Accumulateur selon la revendication 5, caractérisé en ce que les deux conduits se trouvent dans le même plan passant par l'axe de rotation du tiroir (14) et en ce que deux orifices (16) diamétralement opposés ont la même section.

7. Accumulateur selon la revendication 5 ou 6, caractérisé par une goupille ou épingle (21) pour immobiliser le tiroir dans sa position de réglage.

### Claims

1. An oil and gas accumulator for vehicle suspensions, comprising an enclosure (1) having a flexible membrane (2) separating it into two compartments (3) and (4) one of which is intended for receiving a pressurized gas and the second of which is provided with means for connecting it, through a shock absorber, to a hydraulic circuit of the suspension, characterized in that the second compartment (4) of its enclosure is connected to two connectors (9a) and (9b) by two separate circuits in each of which is placed a shock absorber (10a) or (10b), and in that it comprises means (14) for adjusting the two shock absorbers simultaneously.

2. Accumulator according to claim 1, characterized in that it comprises a shock absorber body (6) communicating through a lateral opening (8) with said second compartment (4) and having a connector (9a) or (9b) at each of its ends.

3. Accumulator according to claim 2, characterized in that the shock absorbers (10a) and (10b) are disposed inside the body (6), each between the opening (8) and one of the connectors (9a) or (9b).

4. Accumulator according to one of claims 1 to 3, characterized by a by-pass circuit (17a-18a) or (17b-18b) in parallel across each of the shock absorbers (10a) and (10b) and means (14) for simultaneously regulating the flow rate in the two by-pass circuits.

5. Accumulator according to claim 4, characterized in that the flow rate regulation means are formed by a rotary slide valve (14) having at its periphery calibrated orifices (16) of different sections, movable in front of two ducts communicating with each of the connectors, the orifices (16) being disposed so that, for any angular position of the slide valve, the orifices which are simultaneously in front of the two ducts have the same section.

6. Accumulator according to claim 5, characterized in that the two ducts are in the same plane passing through the axis of rotation of the slide valve (14) and in that two diametrically opposite orifices (16) have the same section.

7. Accumulator according to claim 5 or 6, characterized by a keeper or pin (21) for immobilizing the slide valve in its adjusted position.

### Patentansprüche

1. Ölpneumatischer Speicher für eine Fahrzeugaufhängung mit einem Behälter (1), der mit einer biegsamen Membran (2) versehen ist, die ihn in zwei Teilräume (3) und (4) unterteilt, von denen der eine dazu bestimmt ist, ein unter Druck stehendes Gas aufzunehmen und der zweite mit Mitteln versehen ist, die dazu geeignet sind, ihn unter Zwischenschaltung einer Dämpfungsvorrichtung an einen Hydraulikkreis der Aufhängung anzuschließen, dadurch gekennzeichnet, daß der zweite Teilraum (4) des Behälters mit zwei Anschlüssen (9a) und (9b) verbunden ist über zwei getrennte Kreise, wobei in jedem von ihnen eine Dämpfungsvorrichtung (10a) und (10b) zwischengeschaltet ist und daß er Mittel (14) aufweist, die eine gleichzeitige Regelung der beiden Dämpfungsvorrichtungen erlauben.

2. Speicher nach Anspruch 1, dadurch gekennzeichnet, daß er einen Dämpfungskörper (6) aufweist, der über eine seitliche Öffnung (8) mit besagtem zweiten Teilraum (4) verbunden und an jedem seiner Enden mit einem Anschluß (9a) und (9b) versehen ist.

3. Speicher nach Anspruch 2, dadurch gekennzeichnet, daß die Dämpfungsvorrichtungen (10a) und (10b) im Inneren des Dämpfungskörpers (6) jeweils zwischen der Öffnung (8) und einem der Anschlüsse (9a und 9b) angeordnet sind.

4. Speicher nach einem der Ansprüche 1 bis 3, gekennzeichnet durch einen Nebenschlußkreis (17a-18a) oder (17b-18b) parallel zu jeder der Dämpfungsvorrichtungen (10a) und (10b) sowie Mittel (14) zur gleichzeitigen Regelung der Durchflußmenge in den beiden Nebenschlußkreisen.

5. Speicher nach Anspruch 4, dadurch gekennzeichnet, daß die Mittel zur Regelung der Durchflußmenge durch einen Drehschieber (14) gebildet werden, der an seinem Umfang mit kalibrierten Öffnungen (16) unterschiedlichen Querschnittes versehen ist, die vor zwei Leitungen bewegbar sind, welche jeweils mit einem der Anschlüsse verbunden sind, wobei die Öffnungen (16) derart angeordnet sind, daß für jede Winkelstellung des Drehschiebers die Öffnungen, die sich gleichzeitig vor den beiden Leitungen befinden, den gleichen Querschnitt aufweisen.

6. Speicher nach Anspruch 5, dadurch gekennzeichnet, daß die beiden Leitungen sich in der gleichen, durch die Drehachse des Drehschiebers (14) gehenden Ebene befinden und daß zwei sich diametral gegenüberliegende Öffnungen (16) den gleichen Querschnitt besitzen.

7. Speicher nach Anspruch 5 oder 6, gekennzeichnet durch einen Stift oder eine Nadel (21) zur Festlegung des Drehschiebers in seiner Regelstellung.